Europäisches Patentamt

European Patent Office

Office européen des brevets

(19)

(11) EP 0 758 514 B1

(12) EUROPÄISCHE PATENTSCHRIFT

(45) Veröffentlichungstag und Bekanntmachung des Hinweises auf die Patenterteilung:
**12.05.1999 Patentblatt 1999/19**

(21) Anmeldenummer: **96902260.7**

(22) Anmeldetag: **30.01.1996**

(51) Int Cl.⁶: **H04N 9/67**

(86) Internationale Anmeldenummer:
**PCT/EP96/00378**

(87) Internationale Veröffentlichungsnummer:
**WO 96/26613 (29.08.1996 Gazette 1996/39)**

(54) **VERFAHREN ZUR FARBTRANSFORMATION UND EIN FARBVIDEOSYSTEM**

COLOUR TRANSFORMATION PROCESS AND A COLOUR VIDEO SYSTEM

PROCEDE DE TRANSFORMATION DES COULEURS ET SYSTEME VIDEO EN COULEURS

(84) Benannte Vertragsstaaten:
**AT BE CH DE DK ES FR GB GR IE IT LI LU NL PT SE**

(30) Priorität: **24.02.1995 DE 19506595**

(43) Veröffentlichungstag der Anmeldung:
**19.02.1997 Patentblatt 1997/08**

(73) Patentinhaber: **LDT GmbH & Co.
Laser-Display-Technologie KG
07552 Gera (DE)**

(72) Erfinder: **DETER, Christhard
D-07546 Gera (DE)**

(74) Vertreter: **Geyer, Werner, Dr.-Ing. et al
Patentanwälte
Geyer, Fehners & Partner
Perhamerstrasse 31
80687 München (DE)**

(56) Entgegenhaltungen:
**DE-A- 2 318 804          DE-C- 4 306 797**

**Beschreibung**

Die Erfindung bezieht sich auf ein Verfahren zur Farbtransformation der Farbvalenzen von Bildpunkten eines Farbvideosystems, bei dem jede Farbvalenz durch Komponenten eines Farbvektors innerhalb eines einen Unbuntpunkt einschließenden Farbvalenzbereichs darstellbar ist, der durch eingangsseitige Primärvalenzen einer Signalquelle festgelegt ist, und bei dem für die Darstellung der Bildpunkte bildseitige Primärvalenzen verwendet werden, deren Farbvalenzbereich ebenfalls den Unbuntpunkt einschließt, wobei mindestens eine Farbvalenz dieses Farbvalenzbereichs außerhalb des Farbvalenzbereichs der eingangsseitigen Primärvalenzen liegt und eine Transformation zum Erzeugen von auf bildseitige Primärvalenzen (R", G", B") bezogene Komponenten durchgeführt wird und bildseitige Komponenten negativer Intensität bei Auftreten unterdrückt werden. Weiter bezieht sich die Erfindung auf ein Farbvideosystem zur Darstellung farbiger Bildpunkte mit einem Eingangskreis zum Erzeugen bzw. Übernehmen von eingangsseitigen Primärvalenzen zugehörigen Farbwertsignalen für einen Farbvalenzbereich der einen Unbuntpunkt enthält, mit einer Bilderzeugungseinrichtung zur Erzeugung der Bildpunkte eines Farbvideobildes aufgrund von bildseitigen Primärvalenzen, deren Farbvalenzbereich den Unbuntpunkt und mindestens eine Farbvalenz außerhalb des Farbvalenzbereichs der eingangsseitigen Primärvalenzen enthält, sowie einen Matrixschaltkreis, der zwischen den Eingangskreis und die Bilderzeugungseinrichtung geschaltet ist und eingangsseitige Farbwertsignale in bildseitige Farbwertsignale für die Bildpunkte der Bilderzeugungseinrichtung transformiert.

Farbtransformationen beim Fernsehempfang zur Anpassung von gesendeten Farbwertsignalen an die Phosphore der Bildröhren sind beispielsweise aus dem Buch von Heinwig Lang, "Farbmetrik und Farbfernsehen", R. Oldenbourg Verlag, München, 1978, bekannte Die dort angegebenen Matrixtransformationen im Farbraum können beispielsweise verwendet werden, wenn ein Videobild mit Primärvalenzen nach der FCC-Norm gesendet wird und farbrichtig auf einer Bildröhre dargestellt werden soll, die mit Phosphoren nach der EBU-Norm versehen ist. Die FCC-Norm und die EBU-Norm unterscheiden sich im wesentlichen im Grünbereich, was eine Farbanpassung zur farbrichtigen Darstellung nötig macht.

Während bei dieser Anwendung die Farbvalenzbereiche nicht stark voneinander abweichen, wird jedoch bei Laserprojektionssystemen eine Matrixtransformation wesentlich, da dann die Wellenlängen monochromatisch sind und die zugehörigen Farbvektoren im CIE-Diagramm auf dem Spektralkumenzug liegen. Solche Projektionssysteme sind aus "Large Screen Laser Color TV Projector", Yahiko Yamada et al. , Proceedings of 6th International Quantum Electronics, 1970 und aus der DE-PS 43 06 797 bekannt. Letztere Patentschrift befaßt sich vor allen Dingen mit der farbvalenzrichtigen Wiedergabe eines beispielsweise im EBU-Standard gesendeten Fernsehbildes mit Lasern, deren Wellenlängen die bildseitigen Primärvalenzen bestimmen.

Wie bei den ersten handelsüblichen Fernsehempfangern mit Bildröhren könnte man bei derartigen Farbvideosystemen auch eine Einstellmöglichkeit für die Signalhöhe der Rot- Grün und Blausignale vorsehen, damit das Farbbild entsprechend dem Geschmack eines Benutzers geringfügig verändert werden kann. Dabei wird aber nur der Bereich der Farbtöne und der Farbsättigungen, die durch die eingangsseitigen Primärvalenzen vorgegeben sind, abgedeckt.

Wünschenswert wären aber beispielsweise im Bereich der Werbung und des Marketings auch Farbvideosysteme, die andere Farbtöne oder sattere Farben als durch den eingangsseitigen Farbvalenzbereich bestimmt darstellen können. Beim gegenwärtig bekannten Stand der Technik könnte man beispielsweise Werbevideos mit einem der oben genannten Laserprojektionsgeräten abspielen, wobei die Werbevideos mit Spezialkameras aufgenommen würden oder nachträglich aufbereitet werden müßten, damit ein größerer Farbvalenzbereich zugänglich ist. Weiter wären dann Umbauten in den Laserprojektionsgeräten notwendig, die den größeren Farbvalenzbereich für diese Anwendung verfügbar machen. Derartige Maßnahmen sind allein schon wegen der nötigen Spezialgeräte finanziell sehr aufwendig, was zur Folge hat, daß sogar die Werbung, der üblicherweise über große Geldbeträge verfügt, keinen Gebrauch von dieser Möglichkeit gemacht hat.

Aufgabe der Erfindung ist es, ein Verfahren und ein entsprechendes Farbvideosystem zu schaffen, das es gestattet, von einem größeren zugänglichen Farbvalenzbereich, als durch eingangsseitige Farbwertsignale gegeben, für die Darstellung der Farben in einem Videosystem mit geringem Aufwand Gebrauch zu machen.

Erfindungsgemäß wird diese Aufgabe bei einem Verfahren der eingangs genannten Art dadurch gelöst daß fiktive Primärvalenzen festgelegt werden, deren Farbvalenzbereich die mindestens eine Farbvalenz außerhalb des Farbvalenzbereichs der eingangsseitigen Primärvalenzen und innerhalb des Farbvalenzbereichs der bildseitigen Primärvalenzen enthält und die Transformation über;

-    Umsetzen der Komponenten des Farbvektors von den eingangsseitigen Primärvalenzen auf die fiktiven Primärvalenzen in der Weise, daß die Farbvalenz mindestens einer eingangsseitigen Primärvalenz auf die mindestens eine Farbvalenz außerhalb des Farbvalenzbereichs der eingangsseitigen Primärvalenzen verschoben wird, und

-    Transformieren der umgesetzten Komponenten des Farbvektors von den fiktiven Primärvalenzen auf die bildseitigen Primärvalenzen zur Erzeugung von bildseitigen Komponenten eines Farbvektors, wobei die so erzeugten bildseitigen Farbvalenzen den gleichen Farbton und die gleiche Sättigung wie die transformierte Farbvalenz im fiktiven Primärvalenzsystem aufweist,

durchgeführt wird.

Bei der Erfindung wird ein fiktives Primärvalensystem verwendet. Dieses gestattet eine definierte Umsetzung der eingangsseitigen Farbvalenzen in ein Farbvalenzsystem mit anderen Farbtönen und anderen Farbsättigungen. Erst durch die weitere Transformation erfolgt die Anpassung der im fiktiven Primärvalenzsystem erzeugten Farbvalenzen auf die bildseitigen Primärvalenzen zur Darstellung.

Wie eine derartige Transformation durchzuführen ist, ist aus dem eingangs genannten Stand der Technik bekannt und beispielsweise bei Laserprojektionssystemen schon durchgeführt worden. Erfindungsgemäß ist allerdings zu berücksichtigen, daß die Transformation sich nicht auf die Bildschirmphosphore sondern auf die fiktiven Primävalenzen als Eingangsgrößen bezieht.

Das Verfahren läßt sich für die bessere Farbdarstellung in der Werbung mit einem derartigen Laserprojektionssystem beispielsweise dadurch verwirklichen, daß das Umsetzen gleichzeitig mit der heutzutage oft verwendeten Aufbereitung von Werbefilmen mittels Computern durchgeführt wird. Dabei würden beispielsweise durch das Computerprogramm alle Farben gemäß einer Matrixtransformation von den Primärvalenzen, mit denen der Werbefilm aufgenommen wurde auf die bei einem Laserprojektionssystem eingangsseitig benötigten Primärvalenzen umgesetzt und nur wenn bei der Aufbereitung für bestimmte Produkte oder einen Szenenabschnitt gesättigtere Farben im fiktiven Primälvalenzsystem eingesetzt werden sollen eine Umsetzung der Bildpunkte gemäß dem erfindungsgemäßen Verfahren erfolgen. Für das häufig in der Werbung eingesetzte Mittel der Verfremdung stehen dann vorteilhafterweise mehr Freiheitsgrade durch neue Farbtöne zur Verfügung.

Dieses Beispiel zeigt vor allem, daß der technische Aufwand gegenüber einer Lösung nach dem Stand der Technik, die Spezialkameras, Spezialvideogerate u. s. w. verwenden müßte, beim erfindungsgemäßen Verfahren nicht ins Gewicht fällt.

Das erfindungsgemäße Verfahren erlaubt auch die Verwendung der gleichen Farbwertsignale für verschiedenen Empfänger, die unterschiedliche Primärvalenzsysteme zur Farbdarstellung aufweisen. Werden senderseitig, wie für die neue Fernsehnorm HDTV zu erwarten ist, Farbvalenzen in einem größeren Farbtonbereich aufgenommen und für die standardmäßigen Fernsehgeräte, deren darstellbarer Farbvalenzbereich durch die Bildschirmphosphore bestimmt ist, aufbereitet, lassen sich beispielsweise auf einem Seitenband auch Informationen unterbringen, die einem Empfangsgerät mit größerem bildseitig darstellbaren Farbvalenzbereich anzeigen, wann ein Bildpunkt eine Farbe in einem beispielsweise durch eine Norm festgelegten fiktiven Primärvalenzsystem dargestellt wird. In diesem Empfangsgerät kann dann die Umwandlung und die Transformation entsprechend erfolgen.

Dieses Beispiel zeigt, daß die Erfindung nicht nur die Aufgabe löst, sondern in unerwarteter Weise die Technik bereichert, indem sie sogar die Fernsehübertragung für verschiedene Fernsehgeräte unterschiedlicher Norm gestattet.

Das Verfahren ist also vielfältig einsetzbar. Eine der möglichen Anwendungen kann ferner darin bestehen, deni Benutzer eines Videogerätes die Wahl des fiktiven Primärvalenzsystems beispielsweise über eine Fernbedienung in großem Rahmen selbst zu überlassen, damit er sich je nach Geschmack eine erhöhte Sättigung oder eine geringe Farbtonverfälschung einstellen kann.

Damit der Benutzer eines Fernsehers aber trotzdem immer ein qualitätsmäßig hochwertiges Fernsehbild erhält, ist gemäß einer vorteilhaften Weiterbildung der Erfindung vorgesehen, daß die Farbvalenz des Unbuntpunkts durch das Umsetzen in Komponenten eines Farbvektors im fiktiven Primärvalenzsystem unverändert bleibt.

Gerade bei unbunten Bildpunkten, also weiß oder grau, könnte eine sehr freie Wahl der fiktiven Primärvalenzen zu farbstichigen Bildern führen. Durch die Einschränkung der Freiheitsgrade bei der Wahl des fiktiven Primärvalenzsystems wird eine derartige Farbstichigkeit vermieden, da ein eingangsseitig vorliegender Weißton auch als gleicher Weißton dargestellt wird. Durch diese Möglichkeit der Einschränkung unterscheidet sich das erfindungsgemäße Verfahren von der bei in der Anfangszeit des Farbfernsehens standardgemäß vorgesehenen Wahl unterschiedlicher Amplituden der Farbwertsignale, wodurch sich eine Farbstichigkeit ergeben konnte, die sich vor allem unangenehm in den Weißtönen äußerte.

Wie später aus den Ausführungsbeispielen hervorgeht, gibt es verschiedene Möglichkeiten zur Umsetzung in das fiktive Primärvalenzsystem. Bei einer vorzugsweisen Weiterbildung der Erfindung wird das Umsetzen der Komponenten des Farbvektors vom eingangsseitigen Primärvalenzsystem zum fiktiven Primärsystem mittels einer Matrixtranformation der Komponenten des Farbvektors durchgeführt. Diese Transformation ist mit geringem Aufwand in einer aus dem Stand der Technik bekannten Weise möglich. Außerdem ist diese Transformation linear. Das garantiert eine gleichmäßige Farbtonänderung und Sättigungserhöhung, die nicht bei allen möglichen Umsetzungen, beispielsweise wenn diese mittels extrem nichtlinearer Funktionen ausgeführt werden, garantiert ist.

Die Verwendung einer Matrix zum Umsetzen ermöglicht auch eine technisch sehr einfache Realisierung des Verfahrens, wenn gemäß einer bevorzugten Weiterbildung der Erfindung, bei der zur Transformation nur eine einzige Matrixtransformation mit einer Matrix durchgeführt wird, die sich als Produkt der Matrix zum Umsetzen mit einer Matrix zur Transformation vom fiktiven Pimarvalenzsystem (R',G',B') zum bildseitigen Primärvalenzsystem (R'',G'',B'') ergibt

Das Verfahren gemäß der Weiterbildungen der Erfindung benötigt also insgesamt nur eine Matrixtransformation. Eine Matrixtransformation in Videosystemen mit vergrößertem Farbvalenzbereich wird, wie eingangs schon ausgeführt, zur farbgetreuen Abbildung eingangsseitigen Farbwertsignale nach dem Stand der Technik zweckmäßigerweise standardmäßig eingesetzt. Der Aufwand verschwindet daher gemäß dieser Weiterbildung, denn Durchführung des Verfahren ist nur die Matrixtransformation gemäß der Weiterbildung im Vergleich zu den Transformationen gemäß dem Stand der Technik gemäß der erfindungsgemäßen Lehre zu dimensionieren.

Eine andere bevorzugte Weiterbildung der Erfindung sieht vor, daß die fiktiven Primärvalenzen auf Farbvalenzen festgelegt werden, die den gleichen Farbton wie die eingangsseitigen Primärvalenzen jedoch eine erhöhte Sättigung für mindestens eine der eingangsseitigen Primärvalenz aufweisen.

Dadurch sind ebenfalls größere Farbtonverfälschungen vermeidbar und der Benutzer eines Videogerätes, in dem das erfindungsgemäße Verfahren eingesetzt wird, kann sich an satteren Farben erfreuen, ohne daß die Qualität des Fernsehbildes aufgrund falsch dargestellter Farbtöne beeinflußt wird.

Bei einem Farbvideosystem der eingangs genannten Art ist zur Lösung der Aufgabe vorgesehen, daß eine Schaltung zur Umsetzung von auf die eingangsseitigen Primärvalenzen bezogenen Farbwertsignale auf fiktive Primärvalenzen bezogene Farbwertsignale vorgesehen ist, deren Farbvalenzbereich die mindestens eine Farbvalenz außerhalb des Farbvalenzbereichs der eingangsseitigen Primärvalenzen und innerhalb des Farbvalenzbereichs der bildseitigen Primärvalenzen enthält, wobei mittels der Schaltung die Farbwertsignale mindestens einer eingangsseitigen Primärvalenz auf Farbwertsignale für die mindestens eine Farbvalenz außerhalb des Farbvalenzbereiches der eingangsseitigen Primärvalenzen umsetzbar sind, und der Matrixschaltkreis zur Transformation der auf die fiktiven Primärvalenzen bezogenen Farbwertsignale auf die bildseitigen Primärvalenzen ausgelegt ist.

Das erfindungsgemäße Farbvideosystem weist alle zur Durchführung des Verfahrens notwendigen Schaltungsteile auf. Insbesondere zeichnet es sich durch einen besonders einfachen Aufbau auf Ein Matrixschaltkreis ist zweckmäßigerweise schon in einem Farbvideosystem mit zur Darstellung bezüglich der Eingangssignale unterschiedlichen Primärvalenzen zur farbrichtigen Abbildung der Bildpunkte enthalten. Dieser muß gemäß der Erfindung nur bezüglich einer Transformation von auf fiktive Primärvalenzen bezogene Farbwertsignale ausgelegt werden. Ein erfindungsgemäßes Farbvideosystem ist in dieser Hinsicht also nicht aufwendiger als ein Farbvideosystem nach dem Stand der Technik. Das erfindungsgemäße Farbvideosystem benötigt dann nur eine zusätzliche Schaltung zur Umsetzung, deren Aufwand, wie die später dargestellten Ausführungsbeispiele noch zeigen werden, gering ist oder bei geeigneter Wahl der Umsetzung sogar ebenfalls verschwindet.

Bei einer bevorzugten Weiterbildung werden farbstichige Bilder vermieden, indem die Schaltung für eine Umsetzung der eingangsseitigen Farbwertsignale auf die fiktiven Primärvalenzen so ausgelegt ist, daß eine Farbvalenz des Unbuntpunkts bildseitig mit der eingangsseitigen Farbvalenz darstellbar ist.

Größere unerwartete Farbverfälschungen, die bei einer extrem nichtlinearen Schaltung zur Umsetzung der Farbwertsignale auftreten könnten, werden bei einer Umsetzung der Farbwertsignale über eine Matrixtransformation vermieden. Zur Verwirklichung dieser Art der Umsetzung sieht eine vorzugsweise Weiterbildung der Erfindung vor, daß die Schaltung zur Umsetzung einen weiteren Matrixschaltkreis für eine weitere Matrixtransformation enthält.

Diese Weiterbildung ermöglicht durch die Trennung der Umsetzung von der nachfolgenden farbvalenzrichtigen Transformation auch verschiedene, beispielsweise vom Benutzer zu wählende Einstellungen für verschiedene Arten zur Durchführung des Verfahrens, da ein separater Schaltkreis für die Umsetzung auch die Umschaltung auf verschiedene gewünschte Bedingungen ermöglicht, wenn wahlweise verschiedene Schaltungen vor den Matrixschaltkreis vorschaltbar sind.

Bei einer bevorzugten Weiterbildung verschwindet der zusätzliche schaltungsmäßige Aufwand gegenüber einem Fernsehgerät nach dem Stand der Technik vollständig, welches das erfindungsgemäße Verfahren nicht einsetzt, da bei dieser die Matrixschaltung die Schaltung zur Umsetzung enthält, indem sie für eine Matrixtransformation mit einer einzigen Transformationsmatrix ausgelegt ist, die das Produkt aus der Matrix für die Matrixtransformation der Umsetzung und der Matrix zur Transformation der Farbwertsignale von dem fiktiven Primärvalenzsystemauf die bildseitigen Primärvalenzen ist.

Bei einer anderen vorzugsweisen Weiterbildung der Erfindung ist die Schaltung zur Umsetzung für verschieden wählbare fiktive Primärvalenzen ansteuerbar.

Durch die Ansteuerbarkeit kann dem Benutzer des erfindungsgemäßen Farbvideosystems beispielsweise die Wahlmöglichkeit eröffnet werden, ob er das Bild bezüglich der eingangsseitig gesendeten Farbwertsignalen betrachten will oder beispielsweise von verschiedenen möglichen Sättigungsstufen Gebrauch machen will. Diese Wahlmöglichkeit erhöht nicht nur den Komfort, sondern ermöglicht auch eine Standardisierung, da man keine unterschiedlichen Videosysteme benötigt, wenn man einerseits Bilder gemäß der eingangsseitigen Fernsehnorm betrachten will und andererseits das Videosystem zur Darstellung sonst nicht verfügbarer Farbvalenzen, beispielsweise bei dem eingangs genannten Beispiel bei der Werbung, einsetzen will. Diese Standardisierung verringert so ebenfalls in vorteilhafter Weise den nötigen Aufwand.

Bei einer bevorzugten Weiterbildung des erfindungsgemäßen Farbvideosystems weist die Schaltung für verschieden wählbare fiktive Primärvalenzen steuerbare Widerstände auf, die durch an die Schaltung anlegbare Steuerspannungen oder einleitbare Ströme veränderbar sind.

Mit dieser Weiterbildung wird gegenüber Lösungen, die zwischen verschiedenen Schaltungen zur Umsetzung bei unterschiedlichen Anforderungen umschalten, der Aufwand weiter verringert, denn es können beispielsweise die gleichen Operationsverstärker in der Schaltung verwendet werden. Widerstände sind sogar mit geringen Toleranzen kostengünstig erhältlich, so daß selbst bei genauen Anforderungen bezüglich der Durchführung des Verfahrens der Aufwand immer vertretbar bleibt.

Bei einer bevorzugten Weiterbildung ist vorgesehen, daß Unterdrückungsschaltkreise für negative bildseitige Farbwertsignale vorgesehen sind, die für jedes Farbwertsignal je einen Spannungsteiler aus einer Diode und einem Widerstand enthalten, wobei die Spannungsteiler diodenseitig gegen ein die Schwellspannungen der Dioden kompensierendes Potential geschaltet sind.

Das geschilderte Farbvideosystem würde ohne Unterdrückungsschaltkreise den möglichen Anwendungsbereich des Verfahrens beschränken, da negative Farbwertsignale in der Realität nicht durch eine Lichtintensität darstellbar sind. Beim Einsatz der Unterdrückungsschaltkreise braucht diesem Aspekt weiter keine Beachtung mehr geschenkt zu werden.

Die dargestellte Ausführung der Unterdrückungsschaltkreise mit einem Widerstand und einer Diode ist auch nur wenig aufwendig. Sie ermöglicht sogar, bei entsprechender Auswahl des Widerstands, ein logarithmisches Abschneiden, so daß an den Grenzen des darstellbaren Farbvalenzbereichs, an denen ansonsten negative Farbwertsignale auftreten können größere Farbtonänderungen noch erkennbar bleiben. Durch diese Merkmale der Weiterbildung wird also in vorteilhafter Weise die Bildqualität erhöht.

Die Erfindung wird nachfolgend anhand der Zeichnung beispielshalber noch näher erläutert. Es zeigen:

Fig. 1     eine schematische Darstellung eines Farbvideosystems zur Durchführung des erfindungsgemäßen Verfahrens;

Fig. 2     ein CIE-Diagramm für EBU-Phosphore als eingangsseitige Primärvalenzen und Laserwellenlängen für die bildseitigen Primärvalenzen;

Fig. 3     ein CIE-Diagramm wie Fig. 2, jedoch mit Laserwellenlängen die bei eingangsseitigen Primärvalenzen in der EBU-Norm die höchstmögliche Sättigung erlauben;

Fig. 4     eine Schaltung zur Umsetzung von Farbwertsignalen in ein fiktives Primärvalenzsystem mit höherer Sättigung;

Fig. 5     einen Aufbau eines elektrisch veränderbaren Widerstands zur Verwendung in der Schaltung gemäß Fig. 4 für eine Einstellung der Sättigung, und

Fig. 6     ein Ausführungsbeispiel für eine veränderliche Sättigung der Farben eines Videobildes unter Verwendung der Schaltung von Fig. 4.

In den folgenden Ausführungsbeispielen werden beispielhaft Verfahren und Vorrichtungen dargestellt, bei denen die Sättigung erhöht wird. Das Verfahren und die Vorrichtung sind jedoch auch auf andere Farbtonänderungen anwendbar, wenn die beispielhaft dargestellten Rechnungen von einem in der Farbdarstellung bewanderten Fachmann entsprechend übertragen werden. Alle Rechnungen werden mit der in der Farbmetrik üblichen Nomenklatur dargestellt, bei der Größen in Klammern Vektoren bezeichnen, während Größen ohne Klammern Skalare oder Komponenten eines Farbvektors sind.

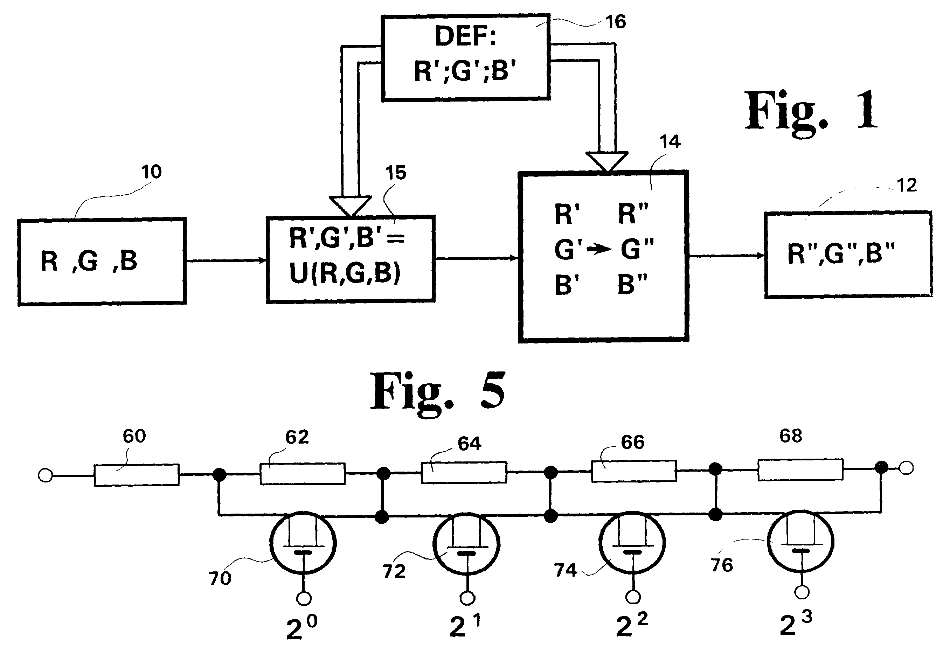

Fig. 1 zeigt ein Farbvideosystem, in dem in einem Eingangskreis 10 Videosignale erzeugt bzw. übernommen werden. Diese beziehen sich im allgemeinen auf Bildschirmphosphore mit den dazugehörigen Primärvalenzen (R), (G), (B), beispielsweise gemäß der Farbnorm EBU oder FCC. Bei üblichen Videosystemen werden die entsprechenden Farbwertsignale zur Farbansteuerung auf eine Bildröhre als Bilderzeugungseinrichtung übertragen. Die üblicherweise angewandte Gamma-Vorentzerrung in einem Farbvideosystem hat auf den farbmetrisch linearen Zusammenhang keinen Einfluß. Man erhält eine farbgetreue Abbildung nur dann, wenn die Bildröhre derselben Norm entspricht wie die Primärvalenzen (R), (G), (B) für die Farbwertsignale, aus dem Eingangkreis 10. Im allgemeineren Fall, wenn andere Primärvalenzen (R"), (G"), (B") für die Darstellung eines Farbbildes eingesetzt werden, müssen die Farbwertsignale auf diese Primärvalenzen (R"), (G"), (B") der Bilderzeugungseinrichtung angepaßt werden.

In Fig. 1 ist eine Bilderzeugungseinrichtung 12 gezeigt, die das Bild farbrichtig wiedergibt, wenn in diese Farbwertsignale gemäß anderen Primärvalenzen (R"), (G"), (B") eingegeben werden. Zur farbrichtigen Darstellung wird nach den Stand der Technik üblicherweise ein Matrixschaltkreis 14 verwendet, der die Farbwertsignale von den Primärvalenzen (R), (G), (B) aus dem Eingangskreis 10 auf die Farbwertsignale der anderen Primärvalenzen (R"), (G"), (B") transformiert. Erfindungsgemäß wird dagegen nicht vom Primärvalenzsystem (R), (G), (B) auf ein andere Primärvalenzsystem (R", G", B") transformiert, sondern von fiktiven Primärvalenzen (R'), (G'), (B'), bei denen eine höhere Sättigung von Farbtönen möglich ist als bei den eingangsseitigen Primärvalenzen (R), (G), (B).

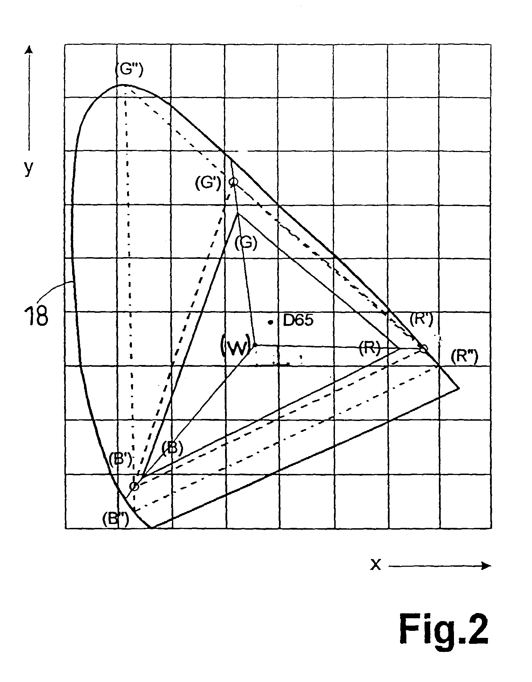

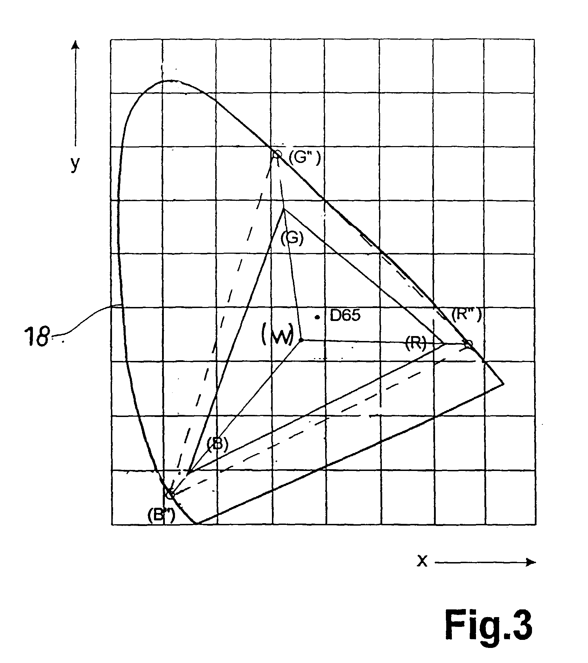

Zur Erzeugung der Eingangssignale für den Matrixschaltkreis 14 ist weiter eine Schaltung 15 zur Umsetzung gemäß dem erfindungsgemäßen Verfahren vorgesehen, welches anschließend in Verbindung mit Fig. 2 und Fig. 3 noch näher erläutert wird. Im wesentlichen erzeugt die Schaltung 15 Farben erhöhter Sättigung bezüglich der fiktiven Primärvalenzen (R'), (G') und (B').

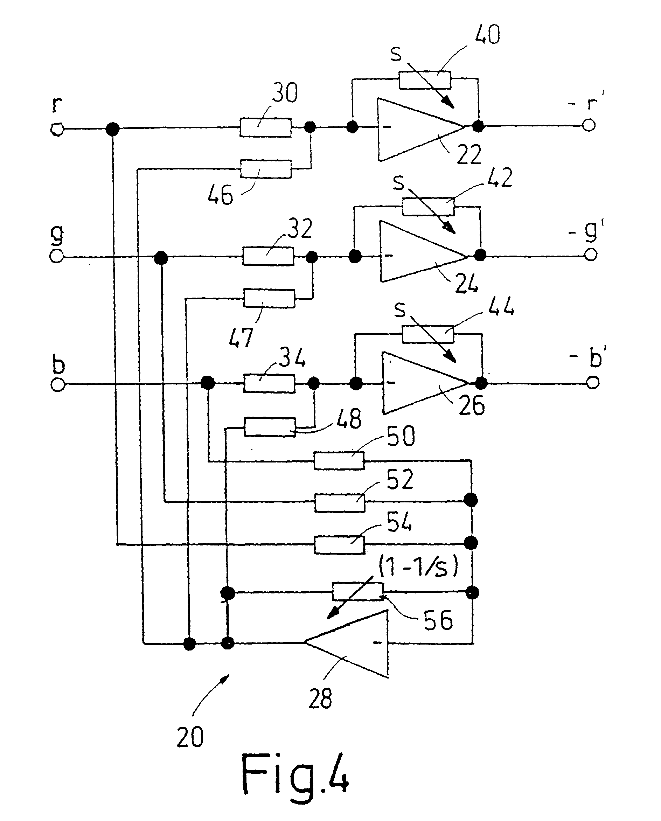

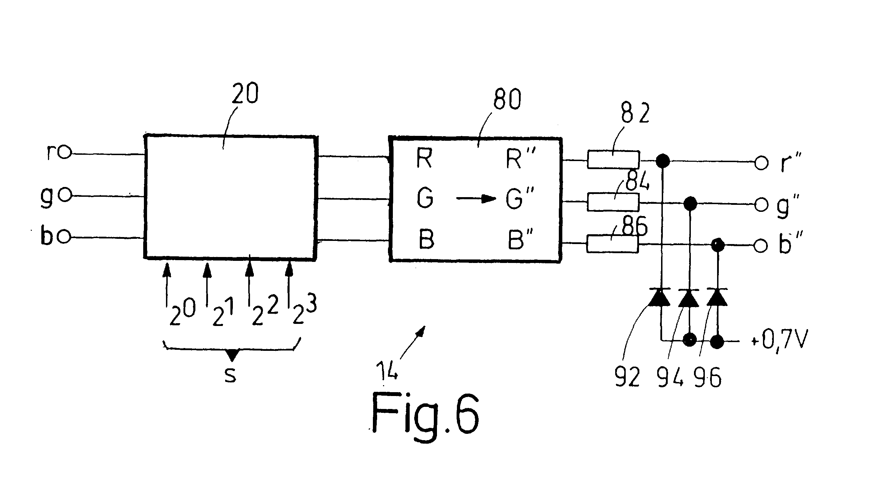

Die die Matrix bestimmenden Bauelemente des Matrixschaltkreises 14, üblicherweise Widerstände, werden hier gemäß den fiktiven Primärvalenzen (R'), (G'), (B') statt nach dem Stand der Technik gemäß den eingangsseitigen Primärvalenzen (R), (G), (B) dimensioniert. In Fig. 1 ist ein Steuerkreis 16 vorgesehen, der die Werte der die Koeffizienten bestimmenden Widerstände im Matrixschaltkreis 14 steuert, damit verschiedene Sättigungen über verschiedene fiktive Primärvalenzen (R'), (G'), (B') möglich sind. Als steuerbare Widerstände eignen sich Thermistoren, die von Strömen aus dem Steuerkreis 16 geheizt werden, oder auch magnetisch, beispielsweise über den Halleffekt änderbare Widerstände, die vom Steuerkreis 16 aus mit einem Magnetfeld beaufschlagt werden. Man kann die Werte der Widerstände aber auch digital regeln, wie nachfolgend anhand von Fig. 4 und Fig. 5 verdeutlicht wird. Verzichtet man auf die Einstellbarkeit einer erhöhten Farbsättigung, kann auch der Steuerkreis 16 entfallen und die Widerstände im Matrixschaltkreis 14 können entsprechend dem fiktiven Primärvalenzsystem (R'), (G'), (B') festgelegt werden.

In gleicher Weise ist der Steuerkreis 16 auch an die Schaltung 15 zur Signalumsetzung angeschlossen. Auch über diese Verbindung kann die in der Schaltung 15 durchgeführte Signalumwandlung auf unterschiedliche fiktive Primärvalenzen (R'), (G') und (B') angepaßt werden, wodurch sich je nach Wahl der fiktiven Primärvalenzen unterschiedliche Sättigungen ergeben. Im Ausführungsbeispiel von Fig. 1 lassen sich so über die Steuerschaltung 16 verschiedene Sättigungen einstellen.

Bei dem Ausführungsbeispiel von Fig. 1 wurde der Steuerkreis 16 so ausgelegt, daß aufgrund der fiktiven Primärvalenzen (R'), (G'), (B') im wesentlichen nur eine erhöhte Sättigung der Farbtöne erreicht wird und Farbtonverfälschungen innerhalb eines tolerablen Bereichs bleiben. Wie dies erreicht werden kann, wird anhand der Fig. 2 näher erläutert.

Fig. 2 zeigt ein CIE Diagramm mit den üblichen Koordinaten x und y, die für die verschiedenen Farbvalenzen von 0 bis 1 laufen. In Fig. 2 ist ein Gitternetz mit Abständen von 0, 1 für x und y eingezeichnet.

Weiter ist der übliche Spektralkurvenzug 18 dargestellt. Bei einem Laservideosystem liegen die Farben auf diesem Sprektralkurvenzug 18, da Laser monochromatisch sind.

Für die Bilderzeugungseinrichtung 12 im Ausführungsbeispiel der Fig. 1 wurden Laser zur Darstellung der Farbe der Bildpunkte eingesetzt. Die dabei verwendeten Wellenlängen ergaben so ein Primärvalenzsystem, welches in Fig. 2 beispielhaft mit den Punkten (R"), (G"), und (B") auf dem Spektralkurvenzug 18 eingezeichnet sind. Der zugängliche Farbvalenzbereich liegt dann innerhalb des durch das mit unterbrochenen Linien zwischen den Koordinaten der Punkte (R"), (G") und (B") gekennzeichneten Dreiecks.

Weiter sind in Fig. 2 die Koordinaten des eingangsseitigen Primärvalenzsystems (R), (G), (B) entsprechend der EBU-Norm durch entsprechende Punkte gekennzeichnet. Der im eingangsseitigen Primärvalenzsystem (R), (G), (B) zugängliche Farbvalenzbereich ist durch das mit durchgezogenen Linien dargestellte Farbdreieck gegeben.

Im CIE-Diagramm nach Fig. 2 ist außerdem der Unbuntpunkt (w) an den Koordinaten x=1/3 und y=1/3 eingetragen, der bei den folgenden Darstellungen verwendet wird. Die folgenden Betrachtungen sind aber darauf nicht beschränkt, sondern können auch auf andere Normlichtarten bezogen werden, beispielsweise auf die Normlichtart D65, deren Unbuntpunkt ebenfalls in der Fig. 2 eingezeichnet ist.

Aus der Fig. 2 ist erkennbar, daß im bildseitigen Primärvalenzsystem (R"), (G") und (B") ein wesentlich größerer Farbvalenzbereich gegeben ist als im eingangsseitigen Primärvalenzsystem (R, G, B). Bei einer Farbtransformation nach dem Stand der Technik wird dieser allerdings nicht ausgeschöpft.

Farben höherer Sättigung sind aber bei der Bilderzeugungseinrichtung 12 möglich. Dies sieht man an den in Fig. 2 eingezeichneten Verbindungsgeraden zwischen dem Unbuntpunkt (w) und den Eckpunkten des den eingangsseitigen Primärvalenzen (R), (G), (B) zugehörigen Farbdreieck. Auf diesen Verbindungsgeraden liegen Farben gleichen Farbtons wie die der EBU-Phosphore jedoch mit anderer Sättigung.

In Fig. 2 bezeichnen die Durchstoßpunkte der Verbindungsgeraden mit dem Spektralfarbenzug 18 Farben maximaler Sättigung. Verfügbar sind allerdings mit der Bilderzeugungseinrichtung 12 nur solche Sättigungen, die in Fig. 2 mit (R'), (G') und (B') bezeichnet sind und durch die Durchstoßpunkte der Verbindungsgeraden mit den Seiten des Farbdreiecks fur die bildseitigen Primärvalenzen (R"), (G") und (B") gegeben sind.

Wenn nun erfindungsgemäß die Farben nicht von den eingangsseitigen Primärvalenzen (R), (G), (B) sondern von einem fiktiven Primärvalenzsystem, das durch diese Punkte (R'), (G') und (B') im CIE-Diagramm festgelegt ist, in

EP 0 758 514 B1

das bildseitige Primärvalenzsystem (R"), (G") und (B") durchgeführt wird, lassen sich in der Bilderzeugungseinrichtung 12 Farben gleichen Farbtons aber mit maximaler Sättigung erzeugen. Bei Wahl eines fiktiven Primärvalenzsystems (R'), (G'), (B') mit Koordinaten im CIE Diagramm, die ebenfalls auf den Verbindungsgeraden, aber näher an den Koordinatenpunkten für die EBU-Phosphore liegen, läßt sich diese Sättigungserhöhung auch beliebig verringern. Es ist also auch eine einstellbare Sättigung durch Wahl der fiktiven Primärvalenzen (R'), (G'), (B') möglich, wie sie durch den Steuerkreis 16 in Fig. 1 schon berücksichtigt wurde.

Die höchstmögliche Sättigung kann dann erreicht werden, wenn man für die Bilderzeugungseinrichtung 12 Laser einsetzt, die Wellenlängen aufweisen, die durch die Schnittpunkte der Verbindungsgeraden mit dem Spektralfarbenzug 18 übereinstimmen ein solches Beispiel ist in Fig. 3 graphisch dargestellt. Man erkennt im Vergleich zu Fig. 2 auch, daß hier das fiktive Primärvalenzsystem gleich dem bildseitigen Primärvalenzsystem gewählt werden kann, wobei sich dann die beschriebene Transformation von den fiktiven Primärvalenzen (R'), (G'), (B') auf die bildseitigen Primärvalenzen (R",G",B") auf eine Einsmatrix reduziert, weshalb dann in einem Farbvideosystem ein entsprechender Schaltkreis zur Transformation entfallen kann.

Zum Erreichen der erhöhten Sättigung, müssen aber die eingangsseitigen Farbwertsignale von dem Primärvalenzsystem (R), (G), (B) auf die fiktiven Primärvalenzen (R'), (G'), (B') so umgesetzt werden, daß eine Farbvalenz an einem der in Fig. 2 angegebenen Koordinaten für die eingangsseitigen Primärvalenzen (R), (G), (B) auf die Koordinatenpunkte der fiktiven Primärvalenzen (R'), (G') und (B) umgesetzt werden.

Die einfachste Möglichkeit zur Umsetzung besteht darin, die eingangsseitigen Farbwertsignale auf die fiktiven Primärvalenzen (R'), (G'), (B') zu beziehen. Dann sind die Komponenten des Farbvektoren im (R'), (G'), (B') Primärvalenzsystem identisch mit den Komponenten der Farbvektoren im eingangsseitigen Primärvalenzsystem, die Farbwertsignale müssen also nicht verändert werden. Dabei wird jedoch bei einer beliebigen Wahl auch der Weißton verändert, es ist also eine Farbstichigkeit des erzeugten Bildes nicht immer auszuschließen.

Deshalb wurde im Ausführungsbeispiel von Fig. 1 eine andere Umsetzung gewählt, die den Weißton (w) unverändert läßt. Selbst bei dieser Nebenbedingung lassen sich mehrere Möglichkeiten der Umsetzung für die Farbwertsignale definieren. Insbesondere ist es vorteilhaft, die Farbwertsignale vom eingangsseitigen Primärvalenzsystem auf das fiktive Primärvalenzsystem über eine Matrixtransformation durchzuführen. Dann ergibt sich die gesamte Transformation von den eingangsseitigen Farbwertsignalen zu den bildseitig verwendbaren Farbwertsignalen durch eine einzige Matrix, die sich als Produkt aus der Matrix für die Umsetzung und die in bekannte Weise bestimmbare Matrix zur Transformation vom fiktiven Primärvalenzsystem (R'), (G'), (B') auf das bildseitige Primärvalenzsystem (R"), (G"), (B") ergibt. Man benötigt dann nur einen einzigen Matrixschaltkreis, statt der separaten Schaltkreise 14 und 15 in Fig. 1. Weiter ergibt sich ein rein linearer Zusammenhang zwischen den eingangsseitigen Farbwertsignalen und den bildseitigen Farbwertsignalen, so daß nichtlineare Sättigungserhöhungen ausgeschlossen sind und eine gleichmäßige Sättigungserhöhung sichergestellt ist.

Die Matrix für die Umsetzung läßt sich auf folgende Weise rechnerisch bestimmen:

Aus einem CIE- Diagramm wie in Fig. 2 lassen sich die Koordinatenwerte $x_R$, $y_R$, $x_G$, $y_G$, $x_B$, $y_B$ der eingangsseitigen Primärvalenzen (R, G, B) und die Koordinatenwerte $x_R$, $y_R$, $x_G$, $y_G$, $x_B$, $y_B$ der fiktiven Primärvalenzen (R'), (G'), (B') entnehmen. Zur Darstellung im Normvalenzsystem müssen die Koordinatenwerte noch um eine dritte Komponente z ergänzt werden, die definitionsgemäß für jede Primärvalenz durch

$$z_i = 1 - x_i - y_i$$

gebildet wird, wobei der Index i als Platzhalter für alle Farben der Primärvalenzen unabhängig davon, ob es sich um die fiktiven oder eingangsseitigen Primärvalenzen handelt, steht. Die jeweiligen x, y, z legen nur die Richtung der Vektoren im Normvalenzsystem fest. Die Wählbarkeit der Länge des Vektors wird ausgenutzt, um für die fiktiven Primärvalenzen Vektoren so zu bestimmen, daß der Unbuntpunkt bei der Umsetzung den gleichen Weißton hat, indem Skalierungsgrößen $S_R$, $S_G$, $S_B$ eingeführt werden.

Die Gleichung des Inhaltes, daß der Farbvektor des Unpuntpunkts mit den Komponenten $r_u$, $g_u$, $b_u$ im eingangsseitigen Primärvalenzsystem (R), (G), (B) und mit den Komponenten $r_u'$, $g_u'$, $b_u'$ im fiktiven Primärsystem (R'), (G'), (B') unverändert bleibt, ist dann im Normvalenzsystem:

$$r_u \begin{Bmatrix} X_R \\ Y_R \\ Z_R \end{Bmatrix} + g_u \begin{Bmatrix} X_G \\ Y_G \\ Z_G \end{Bmatrix} + b_u \begin{Bmatrix} X_B \\ Y_B \\ Z_B \end{Bmatrix} = r_u' S_R \begin{Bmatrix} x_R' \\ y_R' \\ z_R' \end{Bmatrix} + g_u' S_G \begin{Bmatrix} x_G' \\ y_G' \\ z_G' \end{Bmatrix} + b_u' S_B \begin{Bmatrix} x_B' \\ y_B' \\ z_B' \end{Bmatrix},$$

wobei die Klammern auf der linken Seite die Farbvektoren der eingangsseitigen Primärvalenzen im Normvalenzsystem darstellen.

Die Gleichung ergibt drei Bestimmungsgleichungen für die drei Skalierungsgrößen $S_R$, $S_G$, $S_B$, so daß diese eindeutig bestimmbar sind. Mit den dadurch gewonnenen Werten sind die Farbvektoren für die fiktiven Primärvalenzen (R'), (G'), und (B') im Normvalenzsytem mit den Komponenten $X_i$, $Y_i$, $Z_i$ eindeutig festgelegt durch

$$\begin{bmatrix} X_i' \\ Y_i' \\ Z_i' \end{bmatrix} = S_i \begin{bmatrix} x_i' \\ y_i' \\ z_i' \end{bmatrix},$$

wobei der Index i wieder als Platzhalter für die Farben R, G, B steht.

Mit den so gewonnenen Komponenten läßt sich nun eine Matrix

$$M' = \begin{bmatrix} X_R'; X_G'; X_B' \\ Y_R'; Y_G'; Y_B' \\ Z_R'; Z_G'; Z_B' \end{bmatrix}$$

bilden, die zusammen mit der Matrix M der Komponenten der eingangsseitigen Primärvalenzen (R), (G), (B)

$$M = \begin{bmatrix} X_R; X_G; X_B \\ Y_R; Y_G; Y_B \\ Z_R; Z_G; Z_B \end{bmatrix}$$

die gesuchte Matrix über die Beziehung $M^{-1} M'$ zur Umsetzung der Farbwertsignale des eingangsseitigen Primärvalenzsystems (R), (G), (B) auf das fiktive Primärvalenzsystem (R'), (G'), (B') ergibt.

Für den Fall, daß die fiktiven Primärvalenzen im CIE Diagramm durch in der folgenden Tabelle angegebenen Koordinaten festgelegt sind

|       | x     | y     |
|-------|-------|-------|
| (R')  | 0, 65 | 0, 33 |
| (G')  | 0,27  | 0,66  |
| (B')  | 0,14  | 0,05  |

sowie die eingangsseitigen Primärvalenzen durch die EBU-Norm bestimmt sind und der für die obige Gleichung verwendete Unbuntpunkt gleich dem Weißpunkt mit den Koordinaten x=1/3 und y=1/3 ist, ergibt sich beispielsweise aus der angegebenen Rechnung die Transformationsmatrix:

$$\begin{bmatrix} 0,886889; & 0,091808; & 0,021303 \\ 0,008297; & 0,982542; & 0,009161 \\ 0,008560; & 0,058421; & 0,933019 \end{bmatrix}.$$

Die in der Tabelle angegebenen Koordinaten lassen sich mit einer Bilderzeugungseinrichtung verwirklichen, deren Laser als Lichtquellen zur Darstellung der Bildpunkte die Wellenlängen 647, lnm für rot, 514, 5 nm für Grün und 457, 9 nm für blau aufweisen.

Eine andere Umsetzung, die den Unbuntpunkt oder einen Weißton unberücksichtigt läßt sich erzeugen, wenn man gemäß den Abbildungen in den Figuren 2 und 3 den Ansatz macht:

$$(F')-(w)=U[(F)-(w)],$$

wobei (F) einen Farbvektor der eingangsseitigen Primärvalenzen (R), (G) oder (B), (F') einen Farbvektor der fiktiven Primärvalenzen (R'), (G') oder (B') darstellt und U eine Funktion ist, die bei dem angegebenen Ansatz (F) in (F') überführt. Die Funktion U kann in großem Maße frei gewählt werden, so daß sogar nichtlineare Sättigungserhöhungen erreichbar sind.

Ein Ausführungsbeispiel gemäß diesem Ansatz wird im folgenden Anhand der Figuren 4 bis 6 beschrieben, wobei unter anderem dargestellt wird, wie bei einer erfindungsgemäßen Vorrichtung eine vom Benutzer einstellbare Sättigungserhöhung durchgeführt werden kann.

Eine erhöhte Sättigung um den Faktor S tritt beispielsweise auf, wenn die fiktiven Primärvalenzen gemäß dem angegebenen Ansatz als

$$(R')-(w)=S[(R)-(w)]$$

$$(G')-(w)=S[(G)-(w)]$$

$$(B')-(w)=S[(B)-(w)]$$

gewählt werden. Dabei bedeutet (w) den Farbvektor eines Weißtons, der bei der Transformation unverändert gelassen wird. Zu beachten ist hierbei, daß gegenüber dem vorherigen Beispiel mit der dargestellten Matrixtransformationen alle Vektoren des Primärvalenzsystems auf 1 normiert sind, was bei der folgenden Darstellung Vereinfachung mit sich bringt, da normungsabhängige Faktoren nicht beachtet werden müssen.

Ein Farbvektor $(F)=r(R)+g(G)+b(B)$ mit den Komponenten r, g, b wird beispielsweise dann in ein fiktives Primärvalenzsystem (R'), (G'), (B') überführt, wenn die Komponenten nach Umsetzung gleichbleiben, also für den Farbvektor für die gesättigten Farben

$$(F_{UM})=r'(R')+g'(G')+b'(B')$$

die Komponenten r', g', b' im fiktiven Primärvalenzsystem (R'), (G'), (B') gleich den Komponenten r, g, b des Farbvektors (F) gewählt werden. Davon kann man sich leicht überzeugen, wenn zwei der Komponenten r, g, b gleich Null gesetzt werden.

Dann stellt sich der durch die Umsetzung gegebene Farbvektor gemäß der angegebenen Wahl der fiktiven Primarvalenzen dar als

$$(F_{UM})=r(R)+g(G)+b(B)-[S-1][r+g+b](w).$$

Wird der ebenfalls auf 1 normierte Weißton ebenfalls mit Komponenten $L_R$, $L_G$, $L_B$ im eingangsseitigen Primärsystem als $(w)=L_R(R) + L_G(G)+ L_B(B)$ dargestellt wird, ergibt sich für den durch Umsetzen erzeugten Farbvektor $F_{UM}$ im eingangsseitigen Primärvalenzsystem (R), (G), (B) die Gleichung:

$$(F_{UM})=\{r-[s-1][r+g+b]L_R\}(R)+ \{g-[s-1][r+g+b]L_G\}(G)+\{b-[s-1][r+g+b]L_B\}(B)$$

Man erkennt daraus, daß der durch die Umsetzung entstehende Farbvektor im eingangsseitigen Primärsystem für S>1 auch negative Komponenten aufweisen kann, was zeigt, daß die Umsetzung wie erwartet aus dem Farbvalenzbereich der eingangsseitigen Primärvalenzen (R), (G), (B) herauführen kann. Schaltungstechnisch bereiten negative Farbwertsignale weiter keine Probleme, da die noch folgende Transformation von den fiktiven Primärvalenzen auf die bildseitigen Primärvalenzen wieder einen größeren Farbvalenzbereich erzeugt, wodurch die dann erzeugten Farbwertsignale wieder auf positive und physikalisch sinnvolle Werte transformiert werden können.

Bei dem nachfolgenden Ausführungsbeispiel wird eine Schaltung 20 verwendet, mit der die obige Gleichung für Farbwertsignale analog nachgebildet wird. Dabei wird aber die Sättigung S als Gesamtverstärkung ausgeklammert:

$$(F_{UM})=S\{(F)-[1-1/S][r+g+b](w)],$$

so daß sich diese als gleiche Verstärkung für alle drei Komponenten verwirklichen läßt.

In Fig. 4 ist die Schaltung 20 zum Umsetzen von Farbwertsignalen gemäß der angegebenen Gleichung gezeigt. Sie enthält als wesentliche Bauelemente vier Operationsverstärker 22, 24, 26 und 28. Signale mit den Farbwerten r, g, b werden an die invertierenden Eingänge der Operationsverstärker 22, 24 und 26 über Widerstände 30, 32 und 34 angelegt. Die Operationsverstärker 22, 24 und 26 sind mit steuerbaren Widerständen 40, 42 und 44 gegengekoppelt. Die jeweiligen Widerstandsverhältnisse der Widerstandswerte von den Widerständen 40, 42 und 44 und den Widerständen 30, 32 und 34 bestimmen den Verstärkungsfaktor durch die Operationsverstärker 22, 24 und 26. Die Widerstände 30, 32, 34, 40, 42, 44 sind so ausgelegt, daß sich entsprechend der externen Steuerung ein Verstärkungsfaktor S gemäß der erwünschten Sättigung ergibt. Über Widerstände 46, 47, 48 und den Operationsverstärker 28 wird von den Ausgangsspannungen der Operationsverstärker 22, 24, 26 aber eine Spannungswert abgezogen, der bei entsprechender Dimensionierung dem Term [1 - 1/S] (r + g + b) (w) entspricht. Dabei dienen die Widerstände 50, 52, 54 gleichen Werts zur Summierung der Farbwertsignale r, g und b. Die Verstärkung des Verstärkers 28, der von dem Widerstandswert eines ersten steuerbaren Widerstandes 56 abhängt, wird auf (1 - 1/S) ausgelegt. Die Widerstände 46, 47, 48 dienen zur Bedämpfung entsprechend den Komponenten $L_R$, $L_G$ und $L_B$ des Farbvektors (w).

Die Verstärkungen der Operationsverstärker 22, 24, 26 und 28 und hier über Gegenkopplungswiderstände 40, 42, 44, 56 steuerbar. Man könnte statt dieser aber auch Verstärker einsetzen, deren Verstärkung über eine Spannung einstellbar ist. Allerdings sind diese bei den benötigten hohen Frequenzen in einem Videosystem sehr aufwendig. Deshalb wird hier eine Standardschaltung über Operationsverstärker und steuerbare Widerstände vorgezogen. Steuerbare Widerstände können, beispielsweise über ein Magnetfeld oder über eine Heizung eingestellt werden. Man kann jedoch die Verstärkungen auch digital steuern, wenn für die Widerstände 40, 42, 44, 56 jeweils eine Schaltung gemäß Fig. 5 eingesetzt wird. Das Beispiel von Fig. 5 ist auf 16 Stufen von Widerstandswerten entsprechend einer 4 Bitdarstellung für s ausgelegt. Der steuerbare Widerstand gemäß Fig. 5 ist durch in Reihe geschaltete Widerstände 60, 62, 64, 66 und 68 ausgebildet, wobei die Widerstände 62, 64, 66 und 68 über die Drain-Source-Strecke von Feldeffekttransistoren 70, 72, 74, 76 kurzschließbar sind. Solche Feldeffekttransistoren sind als Analogschalter von der Firma Texas Instruments zusammen mit Ansteuerelektronik als integrierte Schaltungen unter der Bezeichnung TL 182C, TL 185C, TL 188C oder TL 191 C erhältlich, bei denen aber bei der Berechnung der Widerstände 62, 64, 66 und 68 der recht hohe Widerstand der Drain-Source-Strecke von über 100Ω berücksichtigt werden muß. Man kann solche Schaltungen jedoch auch konventionell aufbauen, weshalb im folgenden angenommen wird, daß die Drain-Source-Strecke im Kurzschlußfall einen Widerstand von Null hat und der Widerstandswert im gesperrten Fall wesentlich größer als der Widerstand 60 ist. Dann muß für eine binäre Ansteuerung, wie sie in der Zeichnung durch die mit $2^0$, $2^1$, $2^2$, $2^3$ für den jeweiligen Wert einer binären Stelle eines Binärwerts bezeichneten Eingänge dargestellt ist, der Widerstand 64 doppelt so groß wie der Widerstand 62, der Widerstand 66 doppelt so groß wie der Widerstand 64 und der Widerstand 68 doppelt so groß wie der Widerstand 66 sein. Wenn man beispielsweise Sättigungserhöhungen von 10% erreichen will, ist für die Summe der Widerstandswerte der Widerstände von 62, 64, 66 und 68 10% des Wertes des Widerstandes 60 zu wählen.

Bei derartig kleinen Sättigungserhöhungen läßt sich wegen 1 - 1/S , S - 1 auch der Faktor (1 - 1/S) für den Operationsverstärker 28 leicht digital steuern, indem man nämlich den Widerstand 60 bei der Nachbildung des Widerstandes 56 aufgrund der Schaltung von Fig. 5 wegläßt (Widerstandswert 0 Ω, für Widerstand 60), ferner dieselben Werte der Widerstände 62, 64, 66, 68 wie bei den steuerbaren Widerständen 40, 42, 44 vorsieht und die Werte der Widerstände 30, 32, 34, 50, 52, 54 in Fig. 4 gleich wählt.

Eine solche Beschaltung gemäß Fig. 4 und 5 gestattet eine Erhöhung der Sättigung in 16 Stufen, wobei die Stufen durch einen digital dargestellten Binärwert geschaltet werden. Dieser kann beispielsweise aus dem Spannungsabfall am Abgriff eines Potentiometers über einen Analog-Digitalwandler gewonnen werden. Die Erweiterung solcher Schaltungen auf mehr als 16 Stufen läßt sich durch entsprechende Beschaltung mit mehr Feldeffekttransistoren und Widerstände in gleicher Weise erzielen.

In Fig. 6 ist gezeigt, wie die Schaltung 20 gemäß Fig. 4 in einen Matrixschaltkreis 14 eingefügt werden kann. Die Signale für die Farbwerte r, g, b liegen an den Eingängen der Schaltung 20 an, deren Faktor S für die Erhöhung der Sättigung an den mit $2^0$, $2^1$, $2^2$, $2^3$ bezeichneten Eingängen als Binärwert über Logiksignale bestimmt ist. Die gemäß der angegebene Gleichung durch den Schaltkreis 20 umgesetzten Signale werden anschließend auf einen Matrixschaltkreis 80 gegeben, der nach dem Stand der Technik so aufgebaut ist, daß von Farbwertsignalen der eingangsseitigen Primärvalenzen (R, G, B) auf Farbwertsignale der bildseitigen Primärvalenzen (R", G", B") zur Farbdarstellung in der Bilderzeugungseinrichtung 12 transformiert wird. Außerdem wird im Matrixschaltkreis 80 die Vorzeichenumkehr der Farbwertsignale für die Farbwerte r, g, b durch den Schaltkreis 20 berücksichtigt. An jedem Ausgang des Matrixschaltkreises 80 ist je ein Unterdrückungsschaltkreis aus je einem Widerstand 82, 84, 86 und einer Diode 92, 94, 96 bestehenden Spannungsteiler vorgesehen. Diese Unterdrückungsschaltkreise unterdrücken Spannungen falscher Polarität, die dann entstehen, wenn die Erhöhung der Sättigung aus dem Farbtonbereich des durch die Primärvalenzen (R", G", B") aufgespannten Farbtonbereich hinausführt Dies könnte beispielsweise bei einem sehr großen S möglich werden, wie man aus der Fig. 2 an der blauen Primärvalenz sieht, für die aufgrund des begrenzten Farbvalenzbereichs nur eine geringe Sättigungserhöhung möglich ist.

Die Dioden 92, 94, 96 sind hier gegen ein Gegenpotential von 0, 7 Volt geschaltet, das die Schwellspannung von den im Ausführungsbeispiel verwendeten Siliziumdioden 92, 94, 96 ist. Die dargestellte Ansteuerung der Dioden 92, 94, 96 sorgt dafür, daß die Ausgangssignale des Matrixschaltkreises 14 bei negativen Ausgangssignalen des Matrixschaltkreises 80 logarithmisch asymptotisch zu Null gehen. Der Einsatz des logarithmischen Verhaltens wird durch die Auslegung der Widerstände 82, 84 und 86 in Verbindung mit den Diodenkennlinien der Dioden 92, 94 und 96 in bekannter Weise bestimmt.

Das Verfahren und das Farbvideosystem wurden vorhergehend für drei bildseitige Primärvalenzen dargestellt. Es ist natürlich auch möglich, mehr als drei bildseitige Primärvalenzen zu verwenden, die mit einer entsprechenden Matrix angesteuert werden. Dann ergibt sich ein noch größerer Bereich für Farbtonänderungen und Sättigungserhöhungen, die nach dem gleichen Verfahren durchgeführt werden können.

**Patentansprüche**

1. Verfahren zur Farbtransformation der Farbvalenzen von Bildpunkten eines Farbvideosystems, bei dem jede Farbvalenz durch Komponenten eines Farbvektors innerhalb eines einen Unbuntpunkt (w) einschließenden Farbvalenzbereichs darstellbar ist, der durch eingangsseitige Primärvalenzen (R, G, B) einer Signalquelle festgelegt ist, und bei dem für die Darstellung der Bildpunkte bildseitige Primärvalenzen (R", G", B") verwendet werden, deren Farbvalenzbereich ebenfalls den Unbuntpunkt (w) einschließt, wobei mindestens eine Farbvalenz dieses Farbvalenzbereichs außerhalb des Farbvalenzbereichs der eingangsseitigen Primärvalenzen (R, G, B) liegt und eine Transformation zum Erzeugen von auf bildseitige Primärvalenzen (R", G", B") bezogene Komponenten durchgeführt wird und bildseitige Komponenten negativer Intensität bei Auftreten unterdrückt werden, dadurch gekennzeichnet,

   daß fiktive Primärvalenzen (R', G', B) festgelegt werden, deren Farbvalenzbereich die mindestens eine Farbvalenz außerhalb des Fabvalenzbereichs der eingangsseitigen Primärvalenzen und innerhalb des Farbvalenzbereichs der bildseitigen Primärvalenzen (R", G", B") enthält und die Transformation über:

   - Umsetzen der Komponenten des Farbvektors von den eingangsseitigen Primärvalenzen auf die fiktiven Primärvalenzen (R', G', B') in der Weise, daß die Farbvalenz mindestens einer eingangsseitigen Primärvalenz (R, G, B) auf die mindestens eine Farbvalenz außerhalb des Farbvalenzbereichs der eingangsseitigen Primärvalenzen verschoben wird, und

   - Transformieren der umgesetzten Komponenten des Farbvektors von den fiktiven Primärvalenzen (R', G', B') auf die bildseitigen Primärvalenzen (R", G", B") zur Erzeugung von bildseitigen Komponenten eines Farbvektors, wobei die so erzeugten bildseitigen Farbvalenzen den gleichen Farbton und die gleiche Stättigung wie die transformierte Farbvalenz im fiktiven Primärvalenzsystem (R', G', B') aufweist,

   erfolgt.

2. Verfahren nach Anspruch 1, dadurch gekennzeichnet,
   daß die Farbvalenz des Unbuntpunkts (w) durch das Umsetzen in Komponenten eines Farbvektors im fiktiven Primärvalenzsystem (R', G', B') unverändert bleibt.

3. Verfahren nach Anspruch 1 oder 2, dadurch gekennzeichnet,
   daß das Umsetzen der Komponenten des Farbvektors vom eingangsseitigen Primärvalenzsystem zum fiktiven Primärsystem (R', G', B') mittels einer Matrixtransformation der Komponenten des Farbvektors durchgeführt wird.

4. Verfahren nach Anspruch 3, dadurch gekennzeichnet,
   daß eine einzige Matrixtransformation mit einer Matrix durchgeführt wird, die sich als Produkt der Matrix zum Umsetzen mit einer Matrix zur Transformation vom fiktiven Primärvalenzsystem (R',G',B') zum bildseitigen Primärvalenzsystem (R",G",B") ergibt.

5. Verfahren nach Anspruch 1 bis 4, dadurch gekennzeichnet,
   daß die fiktiven Primärvalenzen (R', G', B') auf Farbvalenzen festgelegt werden, die den gleichen Farbton wie die eingangsseitigen Primärvalenzen (R, G, B) jedoch eine erhöhte Sättigung für mindestens eine der eingangsseitigen Primärvalenz (R, G, B) aufweisen.

6. Farbvideosystem zur Darstellung farbiger Bildpunkte mit einem Eingangskreis (10) zum Erzeugen bzw. Übernehmen von eingangsseitigen Primärvalenzen (R, G, B) zugehörigen Farbwertsignalen für einen Farbvalenzbereich der einen Unbuntpunkt (w) enthält, mit einer Bilderzeugungseinrichtung (12) zur Erzeugung der Bildpunkte eines Farbvideobildes aufgrund von bildseitigen Primärvalenzen (R", G", B"), deren Farbvalenzbereich den Unbuntpunkt (w) und mindestens eine Farbvalenz außerhalb des Farbvalenzbereichs der eingangsseitigen Primärvalenzen (R, G, B) enthält, sowie einen Matrixschaltkreis (14), der zwischen den Eingangskreis (10) und die Bilderzeugungseinrichtung (12) geschaltet ist, dadurch gekennzeichnet,
   daß eine Schaltung (15) zur Umsetzung von auf die eingangsseitigen Primärvalenzen bezogenen Farbwertsignale auf fiktive Primärvalenzen (R', G', B') bezogene Farbwertsignale vorgesehen ist, deren Farbvalenzbereich die mindestens eine Farbvalenz außerhalb des Farbvalenzbereichs der eingangsseitigen Primärvalenzen und innerhalb des Farbvalenzbereichs der bildseitigen Primärvalenzen (R", G", B") enthält, wobei mittels der Schaltung (15) die Farbwertsignale mindestens einer eingangsseitigen Primärvalenz (R, G, B) auf Farbwertsignale für die mindestens eine Farbvalenz außerhalb des Farbvalenzbereiches der eingangsseitigen Primärvalenzen (R", G", B") umsetzbar sind, und der Matrixschaltkreis (14) zur Transformation der auf die fiktiven Primärvalenzen (R', G', B') bezogenen Farbwertsignale auf die bildseitigen Primärvalenzen (R", G", B") ausgelegt ist.

7. Farbvidesosystem nach Anspruch 6, dadurch gekennzeichnet,
   daß die Schaltung (10) für das Umsetzen der eingangsseitigen Farbwertsignale auf die fiktiven Primärvalenzen (R', G', B') so ausgelegt ist, daß die Farbvalenz des Unbuntpunkts (w) bildseitig mit der eingangsseitigen Farbvalenz darstellbar ist.

8. Farbvideosystem nach Anspruch 6 oder 7, dadurch gekennzeichnet,
   daß die Schaltung (15) zur Umsetzung einen weiteren Matrixschaltkreis für eine weitere Matrixtransformation enthält.

9. Farbvideosystem nach Anspruch 8, dadurch gekennzeichnet,
   die Matrixschaltung (14) die Schaltung (15) zur Umsetzung enthält, indem sie für eine Matrixtransformation mit einer einzigen Transformationsmatrix ausgelegt ist, die das Produkt aus der Matrix für die Matrixtransformation der Umsetzung und der Matrix zur Transformation der Farbwertsignale von dem fiktiven Primärvalenzsystem (R', G', B') auf die bildseitigen Primärvalenzen (R", G", B") ist.

10. Farbvideosystem nach mindestens einem der Ansprüche 6 bis 10,
    daß die Schaltung (15) zur Umsetzung für verschieden wählbare fiktive Primärvalenzen (R', G', B') ansteuerbar ist.

11. Farbvideosystem nach Anspruch 10,
    daß die Schaltung (15) für verschieden wählbare fiktive Primärvalenzen steuerbare Widerstände aufweist, die durch an die Schaltung anlegbare Steuerspannungen oder einleitbare Ströme veränderbar sind.

12. Farbvideosystem nach mindestens einem der Ansprüche 6 bis 11, dadurch gekennzeichnet,
    daß Unterdrückungsschaltkreise für negative bildseitige Farbwertsignale vorgesehen sind, die für jedes Farbwertsignal je einen Spannungsteiler aus einer Diode (92, 94, 96) und einem Widerstand (82, 84, 86) enthalten, wobei die Spannungsteiler diodenseitig gegen ein die Schwellspannungen der Dioden (92, 94, 96) kompensierendes Potential geschaltet sind.

## Claims

1. Method for colour transformation of the colour valences of pixels of a colour video system, in which each colour valence can be represented by components of a colour vector within a colour-valence range which includes an achromatic point (w) and is set by input primary valences (R, G, B) from a signal source, and in which picture primary valences (R", G", B") whose colour-valence range also includes the achromatic point (w) are used for representing the pixels, at least one colour valence in this colour-valence range lying outside the colour-valence range of the input primary valences (R, G, B) and a transformation being carried out to produce components related to picture primary valences (R", G", B") and picture components with negative intensity being suppressed if they occur, characterized in that fictitious primary valences (R', G', B') are established whose colour-valence range contains the at least one colour valence outside the colour-valence range of the input primary valences and within the colour-valence range of the picture primary valences (R", G", B"), and the transformation is carried out by:

- converting the components of the colour vector from the input primary valences to the fictitious primary valences (R', G', B') in such a way that the colour valence of at least one input primary valence (R, G, B) is shifted to the at least one colour valence outside the colour-valence range of the input primary valences, and
- transforming the converted components of the colour vector from the fictitious primary valences (R', G', B') to the picture primary valences (R", G", B") to produce picture components of a colour vector, the picture colour valences produced in this way having the same hue and the same saturation as the transformed colour valence in the fictitious primary-valence system (R', G', B').

2. Method according to Claim 1, characterized in that the colour valence of the achromatic point (w) remains unchanged by the conversion into components of a colour vector in the fictitious primary-valence system (R', G', B').

3. Method according to Claim 1 or 2, characterized in that the conversion of the components of the colour vector from the input primary-valence system to the fictitious primary system (R', G', B') is carried out by means of a matrix transformation of the components of the colour vector.

4. Method according to Claim 3, characterized in that a single matrix transformation is carried out with a matrix which is given by the product of the conversion matrix multiplied by a matrix for transformation from the fictitious primary-valence system (R', G', B') to the picture primary-valence system (R", G", B").

5. Method according to Claim 1 to 4, characterized in that the fictitious primary valences (R', G', B') are set to colour valences which have the same hue as the input primary valences (R, G, B) but an increased saturation for at least one of the input primary valences (R, G, B).

6. Colour video system for representing coloured pixels, having an input circuit (10) for producing or receiving colour-value signals associated with input primary valences (R, G, B) for a colour-valence range which contains an achromatic point (w), having a picture-production device (12) for producing the pixels of a colour video picture on the basis of picture primary valences (R", G", B") whose colour-valence range contains the achromatic point (w) and at least one colour valence outside the colour-valence range of the input primary valences (R, G, B), and having a matrix circuit (14) which is connected between the input circuit (10) and the picture-production device (12), characterized in that a circuit (15) is provided for converting colour-value signals related to the input primary valences to colour-value signals related to fictitious primary valences (R', G', B') whose colour-valence range contains the at least one colour valence outside the colour-valence range of the input primary valences and within the colour-valence range of the picture primary valences (R", G", B"), it being possible for the colour-value signals of at least one input primary valence (R, G, B) to be converted to colour-value signals for the at least one colour valence outside the colour-valence range of the input primary valences (R", G", B") by means of the circuit (15), and the matrix circuit (14) being designed to transform the colour-value signals related to the fictitious primary valences (R', G', B') to the picture primary valences (R", G", B").

7. Colour video system according to Claim 6, characterized in that the circuit (10) for converting the input colour-value signals to the fictitious primary valences (R', G', B') is designed in such a way that the colour valence of the achromatic point (w) can be represented in the picture with the input colour valence.

8. Colour video system according to Claim 6 or 7, characterized in that the conversion circuit (15) contains a further matrix circuit for a further matrix transformation.

9. Colour video system according to Claim 8, characterized in that the matrix circuit (14) contains the conversion circuit (15) by being designed for a matrix transformation with a single transformation matrix which is the product of the matrix for the matrix transformation of the conversion and the matrix for the transformation of the colour-value signals from the fictitious primary-valence system (R', G', B') to the picture primary valences (R", G", B").

10. Colour video system according to at least one of Claims 6 to 10, characterized in that the conversion circuit (15) can be driven for differently selectable fictitious primary valences (R', G', B').

11. Colour video system according to Claim 10, characterized in that the circuit (15) for differently selectable fictitious primary valences has controllable resistors which can be varied by control voltages which can be applied to, or currents which can be introduced in, the circuit.

12. Colour video system according to at least one of Claims 6 to 11, characterized in that suppression circuits for negative picture colour-value signals are provided, which have one voltage divider, made up of a diode (92, 94, 96) and a resistor (82, 84, 86), for each colour-value signal, the voltage dividers being connected at the diodes to a potential compensating for the threshold voltages of the diodes (92, 94, 96).

**Revendications**

1. Procédé de transformation chromatique des stimuli de couleur de points d'image d'un système vidéo couleur, dans lequel chaque stimuli de couleur peut être représenté par des composantes d'un vecteur de couleur à l'intérieur d'un domaine de stimulus de couleur incluant un point achromatique (w), qui est défini par des stimuli primaires (R, V, B) côté entrée d'une source de signal, et dans lequel on utilise pour la représentation des points d'image des stimuli primaires (R", V", B") côté image, dont le domaine de stimulus de couleur inclut également le point achromatique (w), un stimulus de couleur au moins de ce domaine se situant à l'extérieur du domaine des stimuli primaires côté entrée (R, V, B) et une transformation étant réalisée pour produire des composantes rapportées à des stimuli primaires côté image (R", V", B") et des composantes côté image d'intensité négative étant supprimées à leur apparition, caractérisé en ce que sont définis des stimuli primaires fictifs (R', V', B'), dont le domaine de stimulus de couleur contient le stimulus de couleur au moins unique à l'extérieur du domaine des stimuli primaires côté entrée et à l'intérieur du domaine des stimuli primaires côté image (R", V", B") et en ce que la transformation s'effectue par:

   - conversion des composants du facteur couleur des stimuli primaires côté entrée aux stimuli primaires fictifs (R', V', B') de manière que le stimulus de couleur d'au moins un stimulus primaire côté entrée (R, V, B) soit déplacé vers au moins un stimulus de couleur à l'extérieur du domaine des stimuli primaires côté entrée, et
   - transformation des composantes converties du vecteur de couleur des stimuli primaires fictifs (R', V', B') en stimulus primaire côté image (R", V", B"), afin de produire des composantes côté image d'un vecteur de couleur, les stimuli de couleur côté image ainsi produits présentant la même teinte et la même saturation que le stimulus de couleur transformé dans le système de stimuli primaires fictifs (R', V', B').

2. Procédé selon la revendication 1, caractérisé en ce que le stimulus de couleur du point achromatique (w) reste inchangé par la conversion en composantes d'un vecteur de couleur dans le système de stimuli primaires fictifs (R', V', B').

3. Procédé selon la revendication 1 ou 2, caractérisé en ce que la conversion des composantes du vecteur de couleur du système de stimuli primaires côté entrée au système de stimuli primaires fictifs (R', V', B') est réalisée au moyen d'une transformation matricielle des composantes du vecteur de couleur.

4. Procédé selon la revendication 3, caractérisé en ce qu'il est réalisé une seule transformation matricielle au moyen d'une matrice qui est le produit de la matrice de conversion et d'une matrice de transformation du système de stimuli primaires fictifs (R', V', B') en système de stimuli primaires côté image (R", V", B").

5. Procédé selon les revendications 1 à 4, caractérisé en ce que les stimuli primaires fictifs (R', V', B') sont définis sur des stimuli de couleur qui présentent la même teinte que les stimuli primaires côté entrée (R, V, B) mais une saturation supérieure pour au moins l'un des stimuli primaires côté entrée (R', V', B').

6. Système vidéo couleur pour la représentation de points d'image en couleur avec un circuit d'entrée (10) destiné à produire ou à reprendre des stimuli primaires côté entrée (R, V, B) de signaux de valeur de couleur correspondants pour un domaine de stimulus de couleur qui contient un point achromatique (w), comportant un dispositif de production d'image (12) pour la production des points d'image d'une image vidéo couleur sur la base de stimuli primaires côté image (R", V", B"), dont le domaine de stimulus de couleur contient le point achromatique (w) et au moins un stimulus de couleur à l'extérieur du domaine des stimuli primaires côté entrée (R, V, B), ainsi qu'un circuit de commutation de matrice (14), qui est monté entre le circuit d'entrée (10) et le dispositif de production d'image (12), caractérisé en ce qu'il est prévu un circuit (15) pour la conversion de signaux de valeur de couleur rapportés aux stimuli primaires côté entrée en signaux de valeur de couleur rapportés à des stimuli primaires fictifs (R', V', B'), dont le domaine de stimulus de couleur contient un stimulus de couleur au moins unique à l'extérieur du domaine des stimuli primaires côté entrée et à l'intérieur du domaine des stimuli primaires côté image (R", V", B"), les signaux de valeur de couleur d'au moins un stimulus primaire côté entrée (R, V, B) pouvant être converti en signaux de valeur de couleur pour le stimulus de couleur au moins unique à l'extérieur du domaine des stimuli primaires côté entrée (R", V", B"), et le circuit de commutation de matrice (14) étant conçu pour la transformation des signaux de valeur de couleur rapportés aux stimuli primaires fictifs (R', V', B') en stimuli primaires côté image (R", V", B").

7. Système vidéo couleur selon la revendication 6, caractérisé en ce que le circuit (10) pour la conversion des signaux de valeur de couleur côté entrée en stimuli primaires fictifs (R', V', B'), est conçu de manière que le stimulus de couleur du point achromatique (w) puisse être représenté côté image avec le stimulus de couleur côté entrée.

8. Système vidéo couleur selon la revendication 6 ou 7, caractérisé en ce que le circuit (15) de conversion contient un circuit de commutation de matrice supplémentaire pour une transformation matricielle supplémentaire.

9. Système vidéo couleur selon la revendication 8, caractérisé en ce que le circuit de matrice (14) contient le circuit (15) de conversion, en ce qu'il est conçu pour une transformation matricielle au moyen d'une matrice de transformation unique, qui est le produit de la matrice pour la transformation matricielle de la conversion et de la matrice de transformation des signaux de valeur de couleur du système de stimuli primaires fictifs (R', V', B') en stimuli primaires côté image (R", V", B").

10. Système vidéo couleur selon l'une au moins des revendications 6 à 10, caractérisé en ce que le circuit (15) pour la conversion peut être commandé pour différents stimuli primaires fictifs (R', V', B') sélectionnables.

11. Système vidéo couleur selon la revendication 10, caractérisé en ce que le circuit (15) présente des résistances commandables pour différents stimuli primaires fictifs sélectionnables, qui peuvent être modifiées par des tensions de commande applicables au circuit ou par des courants à introduire.

12. Système vidéo couleur selon l'une au moins des revendications 6 à 11, caractérisé en ce que des circuits de suppression sont prévus pour des signaux de valeur de couleur côté image négatifs, qui contiennent pour chaque signal de valeur de couleur un diviseur de tension constitué d'une diode (92, 94, 96) et d'une résistance (82, 84, 86), les diviseurs de tension étant reliés côté diode à un potentiel compensant les tensions de seuil des diodes (92, 94, 96).

## Fig. 1

DEF:
R';G';B'  — 16

| R ,G ,B | — 10 | → | R',G',B' = U(R,G,B) | — 15 | → | R'  R"  G' → G"  B'  B" | — 14 | → | R",G",B" | — 12 |

## Fig. 5

EP 0 758 514 B1

**Fig.2**

**Fig.3**

Fig.4

Fig.6